# EUROPÄISCHE PATENTANMELDUNG

(11) **EP 0 936 470 A2**
(43) Veröffentlichungstag der Anmeldung: **18.08.1999**
(21) Anmeldenummer: 99103109.7
(22) Anmeldetag: 17.02.1999
(51) Int. Cl.: G01S 13/56

(54) **Mikrowellen-Bewegungssensor und Verwendung eines solchen Bewegungssensors**

(30) Priorität: 17.02.1998 DE 19806592
(71) Anmelder: Steinel GmbH & Co. KG, 33442 Herzebrock-Clarholz (DE)
(72) Erfinder: Steinel, Heinrich Wolfgang, 86825 Bad Wörishofen (DE); Capalini, Richard Dipl.-Ing., 53501 Prelouc (CZ); Kratochvil, Josef Dipl.-Ing., 53012 Pardubice (CZ)
(74) Vertreter: Behrmann, Niels, Dipl.-Ing.

(57) **Zusammenfassung**

Die Erfindung betrifft einen Mikrowellen-Bewegungssensor mit einem Hochfrequenzimpulse einer i.w. konstanten Impulsfolge erzeugenden Sendemodul und einem Empfangsteil, das zum Empfangen von an einem Objekt reflektierter Hochfrequenzimpulse und zum Erzeugen eines Bewegungsdetektionssignals als Reaktion auf eine bewegungsbedingte Änderung der empfangenen Hochfrequenzimpulse ausgebildet ist und eine Mischereinheit mit nicht-linearer Kennlinie aufweist, wobei zwischen einem Ausgangsbereich des Sendemoduls und einem Eingangsbereich des Empfangsteils eine verzögerungsfreie Kopplungseinrichtung vorgesehen ist, die zum Einkoppeln der durch das Sendemodul erzeugten Hochfrequenzimpulse in die Mischereinheit so ausgebildet ist, daß durch die eingekoppelten Hochfrequenzimpulse ein Aufsteuern der Mischereinheit und ein Mischen mit einem reflektierten Hochfrequenzimpuls erfolgen kann, wobei die Kopplungseinrichtung durch eine dem Sendemodul zugeordnete sendeseitige Antenne und eine dieser benachbart vorgesehene, dem Empfangsteil zugeordnete empfangsseitige Antenne realisiert ist.

## Beschreibung

Die vorliegende Erfindung betrifft einen Mikrowellen-Bewegungssensor nach dem Oberbegriff des Anspruches 1 sowie eine Verwendung eines solchen Bewegungssensors.

Ein gattungsbildender Bewegungssensor ist beispielsweise aus dem US-Patent 5,361,070 bekannt. Eine solche Sensorvorrichtung, die auf dem sog. Breitband-Impulsprinzip beruht, unterscheidet sich grundsätzlich von weiteren, herkömmlichen Radar-Bewegungssensoren, die auf dem Doppler-Prinzip beruhen. Während bei den Doppler-Bewegungssensoren ein relativ schmalbandiges, gepulstes oder Dauersignal ausgesendet, von einem sich bewegenden Objekt reflektiert und die zur Bewegungsgeschwindigkeit parallel zum Sendestrahl proportionale Dopplerfrequenz zur Bewegungserfassung ausgewertet wird, handelt es sich bei der gattungsgemäßen Impulsradarvorrichtung um ein primär breitbandiges System, welches eine Bewegungserkennung auf der Basis einer Veränderung der Anzahl reflektierter Impulse in einem i. w. konstanten Abstandsbereich vornimmt.

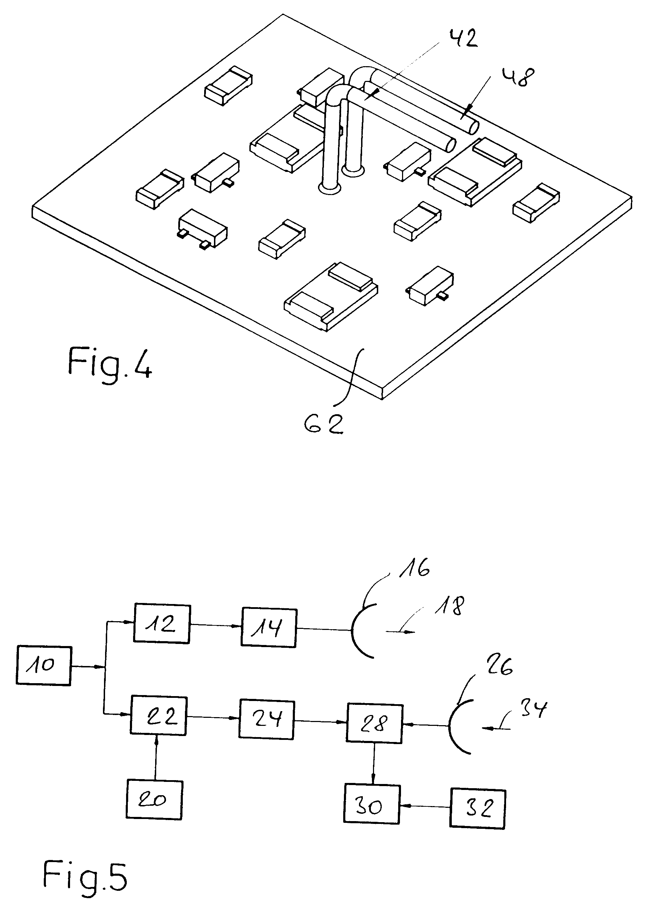

Eine solche gattungsbildende, aus der US 5,361,070 bekannte Vorrichtung soll zur Einführung in die der vorliegenden Erfindung zugrundliegenden Problemstellung anhand des Blockschaltbildes der Fig. 5 erläutert werden.

Ein Impulsgenerator 10, eingesetzt für die Wiederholfrequenz der ausgesendeten Hochfrequenzimpulse (PRF = Pulswiederholfrequenz, pulse repetition frequency) erzeugt Impulssignale einer Frequenz von 1 MHz, entsprechend einem Wiederholintervall von einer Mikrosekunde.

Der Impulsgenerator 10 ist einerseits mit einem Sendezweig des gattungsbildenden Bewegungssensors, bestehend aus einer konstanten Verzögerungseinrichtung 12, einem Sendeimpulsgenerator 14 sowie einer diesem nachgeschalteten Sendeantenne 16 verbunden. Der Pfeil 18 symbolisiert von der Sendeantenne 16 ausgesendete, impulsförmige Breitbandsignale.

Empfangsseitig werden die Wiederholimpulse des Generators 10 über ein mittels eines Stellgliedes 20 einstellbare Zeitverzögerung 22 an einen Gate-Impulsgenerator 24 angelegt, dessen Ausgangssignal eine mit einer Empfangsantenne 26 verbundene Empfangseinheit 28 triggert. Der Empfangseinheit 28 ist eine Auswerteinheit 30 sowie eine Empfindlichkeitseinstellung 32 nachgeschaltet.

Die Funktionsweise dieser bekannten Vorrichtung ist wie folgt: Im Sendezweig kompensiert die Verzögerungseinheit 12 laufzeitbedingte Verzögerungen im Empfangszweig, woraufhin dann das (niederfrequente) Signal des Impulsgenerators 10 an die Sendeimpulserzeugungseinheit 14 angelegt wird. Hier wird durch extrem steilflankiges Ansteuern eines Hochfrequenztransistors ein im Frequenzbereich spektral breitbandiges Sendesignal erzeugt, welches dann über die Antenne 16 abgestrahlt wird. Das steilflankige Schaltverhalten des Sendeimpulsgenerators 14, verbunden mit einer entsprechenden Schwingkreisabstimmung, sorgt für eine um einen Mittelwert im Bereich von 2,1 GHz zentriertes, etwa 500 MHz breites Signal, welches als Sendeimpuls 18 abgestrahlt wird. Von einem (in den Figuren nicht gezeigten) Objekt reflektiert, wird dieses Sendesignal als Empfangssignal 34 aufgenommen, allerdings nur innerhalb eines voreingestellten Zeitraums, der bestimmt ist durch das variable Zeitglied 22 und den nachgeschalteten Impulsformer 24 (der auch entfallen kann, sofern das Ausgangssignal des Zeitgliedes 22 hinreichend steilflankig ist). Genauer gesagt, wird durch die empfangsseitige Zeitverzögerung ein Empfangstor ("Gate") geöffnet, welches eine vorbestimmte, einstellbare Zeit nach dem Aussenden eines jeweiligen Sendeimpulses liegt. Dabei entspricht dann der Zeitversatz zwischen dem Aussenden des Impulses und dem Öffnen des Empfangstores dem Zweifachen der Signallaufzeit zum Objekt, welches in seiner Bewegung zu detektieren ist. Es entsteht ein Empfangsbereich, der dem einer Schale im Raum entspricht, und innerhalb dessen durch das entsprechend eingestellte, empfangsseitige Zeittor Reflexionen des Sendesignals erfaßt werden, und zwar mittels der mit der Empfangsantenne 26 verbundenen Empfangseinheit 28.

Die nachgeschaltete Auswerteinheit 30 bestimmt aus einer Veränderung der Intensität des Empfangssignals die zu detektierende Bewegung gegen ein mittels der Einstelleinheit 32 vorbestimmbares Referenzsignal. Ein sich bewegendes Objekt führt nämlich während seiner Bewegung durch den mittels der Gateeinheit bestimmten Erfassungsbereich zu einer Änderung der Anzahl der empfangenen, reflektierten Impulse, wobei diese Signaländerung sehr lang gegenüber dem PulsWiederholintervall (von einer Mikrosekunde) ist. Durch Auswerten des Empfangssignals bzw. dessen Veränderung über einen demgegenüber langen Zeitraum ist es daher möglich, auf vergleichsweise einfache Art Bewegung zu erfassen.

Konstruktiv stellt nämlich ein solcher Sensor nur äußert geringe Anforderungen an die beteiligten Hochfrequenzbaugruppen, insbesondere als durch die Breitbandigkeit jeglicher Abstimmaufwand vermieden werden kann. Darüber hinaus sind die abgestrahlten Leistungen (bei einem Impuls-Pausenverhältnis von etwa 1:1000) äußerst gering, so daß die Sensoreinheit zudem mit geringem Energieverbrauch betrieben werden kann.

Weitere konstruktive Details ergeben sich aus der herangezogenen US 5,361,070; diese Druckschrift soll auch hinsichtlich weiterer, im Rahmen der nachfolgend beschriebenen Erfindung nicht näher geschilderte Details, insbesondere der Bauteilebemaßungen, als in die vorliegende Anmeldung offenbarungsbildend einbezogen gelten.

Dieser bekannte Bewegungssensor eignet sich besonders für die Bewegungserfassung im Bereich mittlerer Abstände, etwa zwischen 3 und 10 m. Bei großeren Abständen steigen die Anforderungen an Sendeleistung bzw. die Rauscharmut des Empfangsteils überproportional, so daß hier beträchtlicher, zusätzlicher Aufwand nötig ist. Im kürzeren Abstandsbereich weist darüber hinaus der in Fig. 5 gezeigte, schematische Aufbau einen prinzipbedingten Nachteil auf, der zugleich den Ausgangspunkt für die vorliegende Erfindung bildet.

So ist bei kurzen Entfernungen unter einem Meter, und insbesondere unterhalb etwa 50 cm, die Signallaufzeit des ausgestrahlten Sendeimpulses bis zum Empfang kürzer als eine Nanosekunde. Praktisch äußerst schwierig ist es damit, eine Zeitverzögerung (22 in Fig. 5) aufzubauen, deren Zeit-konstante, möglicherweise auch noch einstellbar, in diesem kurzen Bereich unterhalb einer Nanosekunde liegen muß. Parasitäre Effekte, nicht nur der beteiligten, diskreten Bauelemente, einschließlich der Hochfrequenz-Halbleiter, wirken sich praktisch unkontrollierbar und nachteilig aus, auch bilden die beteiligten Hochfrequenzleitungen eine faktische Untergrenze für die erreichbare Signalverzögerung.

Daher ist bei der praktischen Realisierung der in Fig. 5 gezeigten Sensorvorrichtung für Erfassungsbereiche insbesondere unterhalb 50 cm eine Bewegungsdetektierung praktisch nicht mehr möglich. Vielmehr kommt es bei der Einstellung einer zu kurzen Reichweite durch die Überlagerung des Sendeimpulses mit dem Gatterimpuls zu unerwünschter, gegenseitiger Beeinflussung zwischen Sender und Empfänger, die zu einem selbständigen Schwingen des Empfängers führt, woraufhin dann der Erfassungsbetrieb nicht mehr möglich ist.

Nunmehr ist es jedoch für verschiedene Anwendungen des überaus vorteilhaften Breitband-Impulsradarprinzips --breitbandige Radarimpulse weisen eine wesentlich bessere Durchdringungsfähigkeit verschiedener Materialien auf, als etwa schmalbandige Dopplersignale -- äußerst wünschenswert, auch Sensoren zu erhalten, die gerade im kurzen Erfassungsbereich funktionsfähig sind. Ein typisches Anwendungsbeispiel wären Anwendungen im Sanitärbereich, bei denen ein Benutzer durch Annäherung und/oder Handbewegung berührungslos verschiedene Sanitärvorrichtungen steuern kann und der zugehörige Bewegungssensor geschützt hinter einer jeweiligen Anlage angebracht ist.

Wie sich aus obiger Darstellung ergibt, ist jedoch das gemäß US 5,361,070 realisierte Prinzip für derartige Anwendungen unbrauchbar.

Aufgabe der vorliegenden Erfindung ist es daher, einen gattungsgemäßen Mikrowellen-Bewegungssensor zu schaffen, der eine zuverlässige und betriebssichere Bewegungsdetektion innerhalb eines kurzen Erfassungsbereiches durchführen kann, der kürzer als ein Meter, insbesondere kürzer als 50 cm ist.

Die Aufgabe wird durch den Mikrowellen-Bewegungssensor mit den Merkmalen des Anspruches 1 sowie die Verwendung nach dem Anspruch 6 gelöst. Vorteilhafte Weiterbildungen der Erfindung sind in den Unteransprüchen beschrieben.

In überraschender und zum Erreichen des Zieles vorteilhafter Weise bildet der erfindungsgemäße Mikrowellen-Bewegungssensor eine Abkehr von der gattungsgemäßen Technologie dergestalt, daß nicht mehr versucht wird, durch ein diskretes, einstellbares Zeitglied eine vorbestimmte Verzögerung zwischen Sendeimpuls und Empfangsgate zu schaffen (die dann bestimmend für den Empfangsbereich wäre), sondern es wird bewußt und unter Weglassung dieser Zeitverzögerung der Sendeimpuls unmittelbar in den Empfangsmischer eingekoppelt, wobei zu diesem Zweck eine -- bevorzugt in ihrer Koppelwirkung und/oder Dämpfung einstellbare -- Kopplungseinrichtung vorgesehen ist.

Als "Kopplung" im Sinne der vorliegenden Erfindung ist dabei eine wirksame Beeinflussung des Empfangsteils dergestalt zu verstehen, daß durch das eingekoppelte Sendeimpulssignal eine in ihrer Dauer vom Kopplungsgrad abhängige Aufsteuerung des Empfangsteils erfolgt und während dieser Dauer zusätzlich die Mischung mit dem reflektierten Empfangssignal geschieht.

In erfindungsgemäß vorteilhafter Weise wird damit nicht nur der verzögerungszeitbedingte Nachteil aus dem Stand der Technik überwunden, darüber hinaus eignet sich die Vorrichtung nach der vorliegenden Erfindung insbesondere zur Bewegungserfassung innerhalb solcher Entfernungen, wie im Zeitdiagramm eine zeitliche Überlappung von Sendeimpuls und reflektiertem Empfangsimpuls mit sich bringen. Bestimmend für Empfindlichkeit und Abstand ist damit nicht nur der Grad der Kopplung zwischen Sende- und Empfangsmodul, sondern auch die Impulslänge des Sendeimpulses, der einem Anwendungszweck entsprechend ausgestaltet wird.

In der praktischen Realisierung sind so Erfassungsbereiche <30 cm bezogen auf eine Sendeantenne, insbesondere auch <10 cm, möglich, was mit herkömmlichen, mikrowellenbasierten Bewegungssensoren nicht realisierbar ist.

So wird bevorzugt die Kopplungseinrichtung durch das Vorsehen einander benachbarter Sende- und Empfangsantenne realisiert, wobei der Begriff "Antenne" im Sinne der vorliegenden Erfindung -- anwendungszweckabhängig -- weit auszulegen ist und grundsätzlich beliebige, am Ende der Sende- und Empfangsseite vorgesehene Strahler, Strahlerelemente, wie Leitungsstücke od.dgl., einschließt (aufgrund der Breitbandigkeit des abgestrahlten Signals kommt es auf eine exakte Anpassung weniger an). Bevorzugt ist zudem mindestens eine der sende- und/oder empfangsseitigen Antennen als Drahtantenne ausgebildet, wobei dann eine Abstimmung der Kopplung bzw. eine Einstellung eines Kopplungsgrades durch Längenanpassung der mindestens einen Antenne und/oder Ausrichtung derselben relativ zur benachbarten Antenne erfolgen kann.

Insoweit wird im Rahmen der vorliegenden Erfindung also kein diskreter Koppler verwendet, sondern es werden lediglich Kopplungseffekte ausgenutzt, die durch Antennen (-leitungen), nämlich strahlungsseitige Endabschnitte von Sende- und Empfangsteil durch entsprechende Positionierung zueinander entstehen.

Auch liegt es im Rahmen der Erfindung, die Sendeantenne und/oder die empfangsseitige Antenne als Substratantenne auzubilden, wobei sich hierfür der Streifenleitungs-, Schlitz- oder Patch-Typ anbieten würde. Derartige Antennen wären dann zusammen mit der weiteren, diskreten Hochfrequenz- und/oder Auswertelektronik auf dem zugehörigen Substratträger, der Hochfrequenzplatine, angeordnet.

In einem solchen Fall könnte die Abstimmung des Kopplungsgrades beispielsweise durch mechanische Maßnahmen erfolgen, etwa das Abtragen vorbestimmter Strahlungsbereiche einer jeweiligen Antenne, oder durch Aufsetzen bzw. Anbringen von Abstimmitteln, etwa von Resonatoren.

Besonders bevorzugt ist das Empfangsmodul mittels eines symmetrischen Diodenmischers realisiert, dem eine symmetrische Verstärkerbaugruppe nachgeschaltet ist.

Zum Zweck einer Reichweiten- und/oder Empfindlichkeitseinstellung sind weiterbildungsgemäß einstellbare Mittel zur Impulslängenänderung vorgesehen.

Besonders bevorzugt ist es zudem, den erfindungsgemäßen Mikrowellen-Bewegungssensor so zu realisieren, daß eine Mittenfrequenz des ausgesendeten Impulsspektrums in einem der ISM-Bänder liegt, bevorzugt im Bereich zwischen 2,4 und 2,5 GHz. Vorteilhaft ist es auch, die Wiederholfrequenz der konstanten Impulsfolge auf einen Bereich zwischen etwa 100 kHz und etwa 5 MHz einzustellen.

Im Ergebnis läßt sich somit durch die erfindungsgemäße Lösung, den aus dem Stand der Technik bekannten, zeitverzögerten Laufzeitgedanken zugunsten einer unmittelbaren Einkopplung des Sendesignals in den Empfänger fallenzulassen, eine zuverlässige und schwingungsfreie Bewegungsdetektion im Kurzbereich realisieren, die zudem -- je nach Realisierungsform der Kopplungseinheit, etwa als Substrat- und/oder Drahtantenne -- mit sehr geringem Aufwand zu realisieren ist und darüber hinaus das erfindungsgemäße Prinzip auch für eine Großserie fertigungstauglich macht.

Unabhängiger Schutz im Rahmen der Erfindung wird beansprucht für eine bevorzugte Ausgestaltung des erfindungsgemäßen Mikrowellen-Bewegungssensors in Form einer Regen- bzw. Feuchtigkeitssensor-Vorrichtung. Hier ist es besonders bevorzugt, den Sensor hinter einer Feuchtigkeits-Einfallsfläche vorzusehen, etwa einem Fenster oder einer anderen, feuchtigkeitsgeschützten Abdeckung. Erfindungsgemäß wird dann ein Feuchtigkeitseinfall auf die im Erfassungsbereich des Sensors liegende Oberfläche als Bewegung detektiert und daraufhin das Erfassungssignal ausgegeben.

In der KFZ-Technik ist es dabei insbesondere bevorzugt, einen solchen Feuchtigkeits- bzw. Regendetektor an einer vorbestimmten Stelle hinter der Frontscheibe vorzusehen, oder aber außerhalb der Fahrgastzelle hinter anderen, geeigneten Abdeckungen, die von auftreffender Feuchtigkeit betroffen sind, etwa den Außenspiegelgehäusen oder den Stoßstangen. Voraussetzung ist, daß diese Abdeckungen aus einem mikrowellendurchlässigen Material realisiert sind.

Weiterbildungsgemäß ist es hier insbesondere dann möglich, als Reaktion auf etwa erfaßten Regen einen (Scheiben-) Wischerbetrieb zu aktivieren, diesen gar regenmengenabhängig in seiner Geschwindigkeit einzustellen, oder für Gebäude einen automatischen Schließbetrieb von Fenstern als Reaktion auf beginnenden Regen einzuleiten.

Hierfür ist es im Rahmen der Erfindung vorgesehen, daß die Oberfläche durch ein Gebäudefenster, insbesondere ein Dachfenster, ausgebildet ist, der Mikrowellen-Bewegungssensor im Gebäudeinneren hinter dem Fenster angeordnet und zum Aktivieren eines Fenster-Schließbetriebs als Reaktion auf einen detektierten Regeneinfall ausgebildet ist.

Weitere Vorteile, Merkmale und Einzelheiten der Erfindung ergeben sich aus der nachfolgenden Beschreibung von Ausführungsbeispielen sowie anhand der Zeichnungen; diese zeigen in
- Fig. 1:: ein Blockschaltbild des erfindungsgemäßen Mikrowellen-Bewegungssensors mit allgemeinen Funktionsblöcken und deren Verschaltung untereinander;
- Fig. 2:: ein Signal-Zeitdiagramm mit einer Darstellung einander überlagerter Sende- und Empfangsimpulse;
- Fig. 3:: ein Detailschaltbild des erfindungsgemäßen Mikrowellen-Bewegungssensors gemäß einer ersten, bevorzugten Ausführungsform;
- Fig. 4:: eine Perspektivansicht auf eine bestückte Platine als Realisierungsform der Schaltung gemäß Fig. 3, wobei Sende- und Empfangsantenne als zwei benachbarte Drahtantennen realisiert sind, und
- Fig. 5:: ein Blockschaltbild des gattungsbildenden Mikrowellen-Bewegungssensors aus dem Stand der Technik.

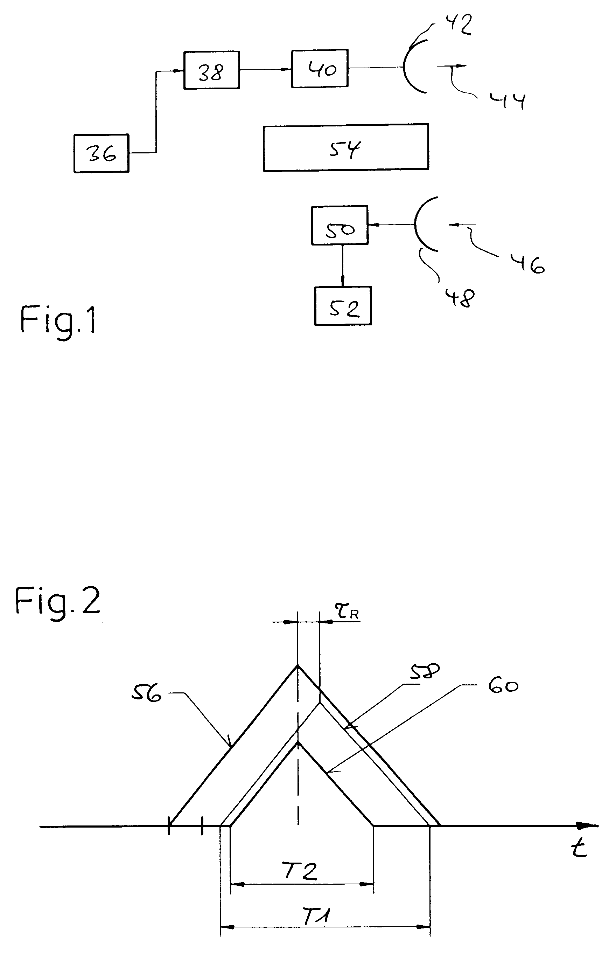

Der Sendezweig der Sensoranordnung gemäß Fig. 1 ist an die aus dem Stand der Technik bekannte Vorrichtung angelehnt: Ein PRF-Rechteck-Impulsgenerator 36 erzeugt Rechteckimpulse einer (niederfrequenten) Wiederholfrequenz von 2 MHz, diese werden zur Kompensation der Laufzeit im Empfangsteil in der Verzögerungseinheit 38 zeitverzögert, woraufhin dann ein Impulsgeber für hochfrequente, kurze Impulse 40 angesteuert wird; dessen steilflankiges Ausgangssignal liegt an einer Sendeantenne 42 an und erzeugt (mit dem Pfeil 44 beschriebene), impulsförmige Sendesignale einer Mittenfrequenz von etwa 2,4 GHz in der PRF. Benachbarte Spektrallinien im Frequenzbereich liegen dabei im Abstand der PRF von 2 MHz nebeneinander.

Das am Objekt reflektierte Sendesignal (Empfangssignal gemäß Pfeil 46) wird durch eine Empfangsantenne 48 aufgenommen und eine Empfangseinheit 50 (realisiert durch einen Diodenmischer) zugeleitet. Das Mischerprodukt wird daraufhin in einer nachgeschalteten Verstärker- und Auswerteeinheit 52 aufbereitet und in ein Bewegungs-Detektionssignal umgesetzt. Zusätzlich ist -- in der Fig. 1 symbolisch zwischen Sendeantenne 42, Empfangsantenne 48, Sende-Impulsgeber 40 und Empfangseinheit 50 gezeigt -- eine Kopplungseinheit 54 vorgesehen, die zum -- unmittelbaren und verzögerungsfreien -- Einkoppeln des Sendesignals in den Empfänger ausgebildet ist; grundsätzlich kann dieses Koppeln durch Koppelwirkung zwischen jedem der beteiligten vier Elemente erfolgen -- Impulsgeber 40 unmittelbar in die Empfangseinheit 50 und/oder in die Empfangsantenne 48, Sendeantenne 42 in die Empfangsantenne 48 und/oder unmittelbar in die Empfangseinheit 50.

Das Impuls-Zeitdiagramm in Fig. 2 verdeutlicht das erfindungsgemäß erreichte, unmittelbar und schwingungsfreie Koppeln: Entlang einer horizontalen Zeitachse t ist ein im gezeigten Ausführungsbeispiel dreieckförmig dargestellter, erster Sendeimpuls 56 gezeigt (in der Vertikalen ist eine jeweilige Signalamplitude aufgetragen), der mittels starker Kopplung, also mit hoher Amplitude, in den Empfangsmischer eingekoppelt worden ist und diesen über die Dauer seiner Signallänge aufsteuert.

Um einen Zeitabstand τ_{R} versetzt ist ferner in der Fig. 2 das reflektierte Empfangssignal 58 gezeigt, welches am zu detektierenden Objekt reflektiert wurde (insoweit beträgt die Verzögerungszeit τ = 2 R/c, wobei R die einfache Entfernung zum Ziel und c die Lichtgeschwindigkeit bedeutet). Die Überlappungszeit zwischen diesen beiden Signalen --eingekoppelter, erster Sendeimpuls 56 und Empfangssignal 58 -- ist in der Fig. 2 mit T1 bezeichnet. Während dieser Dauer sind im Empfangsmischer beide Signale vorhanden, und es findet eine Mischung des Empfangssignals statt.

Zusätzlich eingezeichnet ist in Fig. 2 ein zweiter Sendeimpuls 60, der (alternativ) mittels gegenüber dem mit 56 bezeichneten Fall schwacher Kopplung in den Empfangsmischer eingekoppelt worden ist. Die wirksame Überlagerungszeit mit dem Empfangssignal 58 beträgt hier nur die kürzere Dauer T2.

Es zeigt sich also, daß durch gezieltes Verändern der Kopplung zwischen Sende- und Empfangsteil die Zeit, an welcher am Mischer beide Signale (angekoppeltes Sendesignal sowie reflektiertes Empfangssignal) vorliegen, gesteuert werden kann. Wenn zudem die Kopplung hinreichend klein ist, wie im Fall des zweiten Sendeimpulses 60, besitzt der eingekoppelte Sendeimpuls eine geringere Amplitude als das reflektierte Empfangssignal, so daß die effektive Mischdauer ausschließlich vom eingekoppelten Signal bestimmt wird. Bei keiner oder sehr schwacher Kopplung liegt der Sendeimpuls unter dem Rauschpegel des Mischers, womit die Sensorreichweite auf Null sinkt.

Zusätzlich erkennbar ist, daß es gemäß Darstellung in Fig. 2 auch zu einer Zeitverschiebung zwischen den überlagerten, effektiven Mischperioden kommt, je nachdem, welches Signal -- das eingekoppelte Sendesignal oder das Empfangssignal --das stärkere ist.

Die Breite des Sendeimpulses im Zeitbereich ist dabei durch die Öffnungszeit des Transistors VT1 bestimmt.

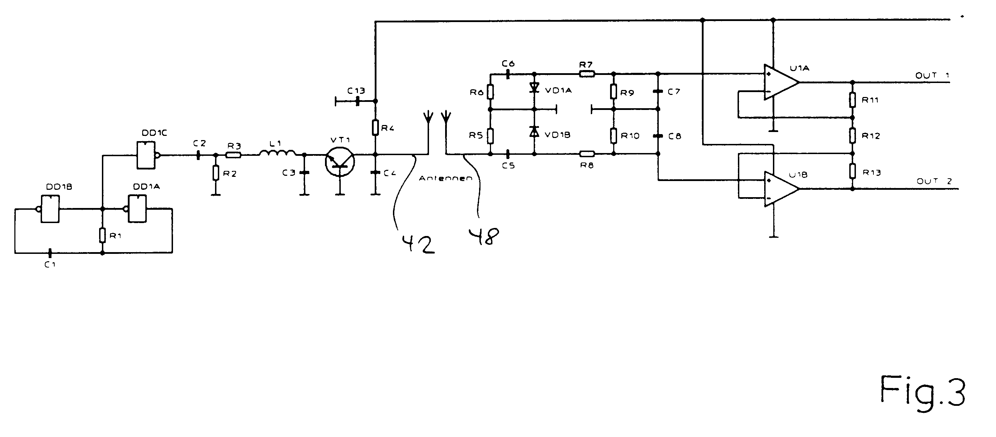

Eine konkrete, schaltungstechnische Realisierung der Erfindung ist in Fig. 3 gezeigt, wobei im linken Schaltungsbereich das Sendemodul und im rechten Schaltungsbereich das - - symmetrisch ausgeführte -- Empfangsmodul dargestellt ist. Die Fig. 3 stellt insoweit die beste Ausführungsform (best mode) der Erfindung dar.

Der Rechteckimpulsgenerator (36 in Fig. 1) ist realisiert durch zwei gekoppelte Inverter DD1B, DD1A, wobei die PRF von zwei MHz durch geeignete Bemessung von C1 und R1 bestimmt wird.

Zur Trennung und weiteren Impulsformung ist diesem Oszillator ein Inverter DD1C nachgeschaltet (nicht zwingend notwendig), dessen Ausgangssignal am Differenzierglied aus Kondensator C2 und Widerstand R2 zu einem Impulspaar (positiver Impuls bei steigender Rechteckflanke, negativer Impuls bei fallender Rechteckflanke) differenziert wird. Der negative Impuls öffnet den Hochfrequenztransistor VT1, wobei ein Widerstand R3 den Maximalstrom der Basis-Emitter-Strecke von VT1 begrenzt.

Eine Induktivität L1, ein Kondensator C3 sowie parasitäre, innere Kapazitäten des Transistors VT1 sind Bestandteile eines Hochfrequenzoszillators, der dem am Kollektor des Hochfrequenz-Transistors VT1 an die Sendeantenne 42 auskoppelten, impulsförmigen Sendesignal die Mittenfrequenz von im dargestellten Ausführungsbeispiel etwa 2,4 GHz bei einer Bandbreite von etwa 500 MHz gibt. Der sendeseitig noch zur positiven Versorgungsspannung gezeigte Widerstand R4 dient neben dem Trennkondensator C4 der Gleichstrom-Arbeitspunkteinstellung von VT1.

Auf die gezeigte Weise funktioniert daher der Hochfrequenz-Oszillator als freischwingender HF-Oszillator, der durch einen Impuls einmalig zur Schwingung angeregt wird, wobei die Impulsdauer dann durch die (vorgegebene) Dämpfung des Schwingkreises festgelegt ist. Eine derartige Lösung zeichnet sich durch herausragende konstruktive Einfachheit aus.

Das erzeugte Frequenzspektrum wird über die Sendeantenne 42 ausgestrahlt, am zu detektierenden Objekt reflektiert und trifft dann -- um das zweifache der Signallaufzeit zum Objekt verzögert -- auf die Empfangsantenne 48. Dieser ist ein symmetrischer, mittels Hochfrequenzdioden VD1A, VD1B realisierter Diodenmischer nachgeschaltet. Hochfrequenzseitig sind zudem die Kondensatoren C5, C6 als Trennkondensatoren zur Empfangsantenne 48 vorgesehen, und zusammen mit den Widerständen R5 bzw. R6 dienen sie als Impedanzanpassung für den Mischer.

Über die Empfangsantenne 48 liegt jedoch nicht nur das zeitverzögerte, reflektierte Empfangssignal an den Mischerdioden VD1A, VD1B an, darüber hinaus wird über eine unmittelbare (kapazitive) Kopplung zwischen Sendeantenne 42 und Empfangsantenne 48 auch verzögerungsfrei der Sendeimpuls direkt eingekoppelt, gemäß dem in Fig. 2 dargestellten Signalverlauf. Es kommt damit in VD1B zur Mischung der beiden Signale, wobei ein jeweiliger Signalpegel zumindest so hoch sein muß, damit zum Erreichen dieses Zweckes VD1B wenigstens teilweise geöffnet ist (grundsätzlich würde zur prinzipgemäßen Funktion des erfindungsgemäßen Mikrowellensensors auch ein Mischer mit lediglich einer Diode ausreichen; mit dem Zweck einer verbesserten, niederfrequenten Verstärkung des Mischersignals weist jedoch die in Fig. 3 gezeigte, symmetrische Bauform Vorteile auf).

Eine Filterung des niederfrequenten Mischersignals erfolgt mittels des aus Widerstand R8 sowie Kondensator C8 gebildeten Filters (bzw. analog mittels des Netzwerkes R7, C7). Die zusätzlich gezeigten Parallelwiderstände R9 (für C7) sowie R10 (für C8) schließen gleichstromseitig die Eingangskreise nachgeschalteter Operationsverstärker U1A bzw. U1B. Operationsverstärker im Zusammenhang mit der vorliegenden Realisierungsform weisen die vorteilhafte Eigenschaft hoher Eingangsimpedanz der nichtinvertierten Eingänge auf und belasten damit den Mischer nur geringfügig; darüber hinaus ist eine hohe Verstärkung erreichbar, die mittels des Widerstandsnetzwerkes R11, R12, R13 eingestellt wird.

An den Ausgängen der Operationsverstärker U1A, U1B liegt ein niederfrequentes Signal an, dessen Frequenz der Geschwindigkeit des erfaßten Objektes proportional ist. Falls die an den Ausgängen OUT1, OUT2 erreichbare Amplitude für eine nachgeschaltete Auswertung noch nicht ausreichend ist, können weitere symmetrische Verstärkerstufen nachgeschaltet werden, ebenso wie alternativ einseitig ein unsymmetrischer Verstärker.

Das an den Mischerdioden VD1A, VD1B anliegende Signal beinhaltet eine Gleichstromkomponente, die eine Vorspannung für die nachgeschalteten Operationsverstärker anbietet.

Die Fig. 4 verdeutlicht den mechanisch-konstruktiven Aufbau dieser Schaltung auf einer mittels eines Hochfrequentsubstrats realisierten Platine 62; die weiteren Elektronikkomponenten für die Hochfrequenz- und Auswertungsschaltkreise der Schalter gemäß Fig. 3 sind in Fig. 4 lediglich schematisch angedeutet.

Bei der gezeigten Ausführungsform ist die erfindungsgemäße Kopplungseinrichtung realisiert durch die Positionierung der jeweils gewinkelt ausgebildeten Sende- 42 bzw. Empfangsantenne 48 als benachbartes Antennenpaar. Damit koppelt dann kapazitiv der über die Sendeantenne 42 abgestrahlte Sendeimpuls unmittelbar in die danebenliegende Empfangsantenne 48 ein, die zusätzlich das innerhalb des kurzen Erfassungsbereichs am Objekt reflektierte Empfangssignal aufnimmt.

Durch verschiedene Maßnahmen ist nun eine Einstellung des Kopplungsgrades zwischen Sende- und/oder Empfangsantenne möglich, beispielsweise durch (selektives) Ablängen der Sende- und/oder Empfangsantenne, und/oder Veränderung der Ausrichtung der gezeigten, gewinkelten Drahtenden.

Über das gezeigte Ausführungsbeispiel sind zahlreiche andere Varianten möglich, sowohl betreffend die schaltungstechnische Realisierung der Sensoreinheit, als auch die Umsetzung der Kopplungseinheit.

So ist es insbesondere möglich, etwa die in Fig. 4 gezeigte Sensoreinheit mit lediglich einem Antennendraht auszuführen, beispielsweise auf der Sendeseite, um dann sowohl das Empfangssignal als auch das direkt eingekoppelte Sendesignal über einen Leitungsabschnitt, eine Kontaktfläche od.dgl. des Substratträgers 62 empfangsseitig aufzunehmen.

Auch liegt es im Umfang der Erfindung, sowohl Sende- als auch Empfangsantenne mit Hilfe von Strahlern bzw. strahlenden Leiterflächen und/oder Schlitzen zu realisieren, die, etwa in Form von Mikrostreifen-Leitungstechnik, unmittelbar auf dem Substratträger aufgebracht sind und beispielsweise zum Zweck der Kopplung sende- und empfangsseitig einander benachbart angeordnet sind. Eine Beeinflussung der Kopplung, beispielsweise zwischen zwei nebeneinanderliegenden Patches oder zwei koppelnden Mikrostreifenleitungen kann dann entweder durch mechanisches Beeinflussen einer wirksamen Flächengröße eines Strahlers erfolgen, z.B. durch Abtragen, oder aber durch Aufsetzen geeigneter Abstimmittel, wie etwa eines (dielektrischen) Resonators.

Eine zusätzliche Weiterbildung der Erfindung besteht darin, das Sendesignal der Sensoreinheit mit einem niederfrequenten Signal zu überlagern bzw. zu modulieren. Wenn ein solches, bekanntes niederfrequentes Signal in den Sender eingekoppelt wird, würde eine nachgeschaltete Auswerteeinheit ein erfaßtes Bewegungssignal als Änderung des angekoppelten Sendesignals erkennen. Wird jedoch nichts empfangen, liegt möglicherweise ein Defekt im Signalweg vor, oder aber der Sensor ist defekt; eine derartige Weiterbildung eignet sich daher zur Betriebsüberwachung und -kontrolle der erfindungsgemäßen Sensoreinheit.

Ein besonders nützliches Anwendungsgebiet des erfindungsgemäßen Bewegungssensors liegt im Bereich der Regen- bzw. Feuchtigkeitsdetektion. Es hat sich in Versuchen gezeigt, daß ein erfindungsgemäßer Bewegungssensor mit kurzem, einstellbarem und fest definiertem Erfassungsbereich (unabhängig etwa von einer Sendeleistung) von beispielsweise 10, 20 oder 30 cm hinter einer Auftrefffläche für Feuchtigkeit montiert werden kann und die auftreffende Feuchtigkeit dann als Bewegung erfaßt, mithin also durch das Sensorsignal dann ein vergleichsweise zuverlässiger Indikator für Regen od. dgl. erhältlich ist.

Zur konkreten Realisierung könnte ein solcher Sensor beispielsweise hinter der Windschutzscheibe eines PKW, etwa hinter dem Rückspiegel, montiert werden und in Fahrtrichtung auf die Windschutzscheibe gerichtet sein. Auftreffende Regentropfen würden dann entsprechend das Bewegungs-Erfassungssignal auslösen, und könnten darüber hinaus sogar eine Quantifizierung der auftreffenden Wassermenge ermöglichen. Im Ergebnis könnte dann der Bewegungssensor nicht nur Scheibenwischer aktivieren bzw. deaktivieren, sondern sogar eine regeneinfallsabhängige Steuerung der Scheibenwischereinheit vornehmen. Es ist davon auszugehen, daß eine solche Lösung bisherigen Regensensoren, die üblicherweise an der Scheibenaußenfläche sitzen und beispielsweise die durch Nässe bewirkte Änderung der elektrischen Leitfähigkeit messen, deutlich überlegen ist; nicht nur sind herkömmliche Sensoren gegen Schwankungen der Luftfeuchtigkeit anfällig, sondern sie sind obendrein durch Verschmutzung oder Manipulation bedroht. Dagegen haben etwa Verschmutzungen der Scheibe auf das Mikrowellenmeßergebnis keinen Einfluß, da diese unbeweglich sind und von den Mikrowellen gut durchdrungen werden können.

Alternativ wäre es möglich, für den KFZ-Bereich eine Regendetektion durch Vorsehen der Sensoreinheit hinter anderen (mikrowellendurchlässigen) Abdeckungen vorzusehen; hier kämen etwa die Stoßstangen oder die Gehäuse der Außenspiegel in Betracht.

Denkbar ist es zudem, Einzelimpulse auszunutzen, die etwa von auf eine überwachte Frontscheibe auftreffenden Insekten oder einzelnen Wasserspritzern ausgelöst werden. Bei entsprechender Auswertung dieser Signale könnte dann eine Waschfunktion aktiviert werden.

Andere Einsatzmöglichkeiten ergeben sich beispielsweise im Gebäudebereich. Eine erfindungsgemäße Bewegungssensoreinheit, die, wie beschrieben, mit relativ geringem herstellungstechnischen Aufwand realisierbar ist, könnte zusammen mit etwa einem motorisch betriebenen Dachfenster eine Feuchtigkeits- bzw. Regenüberwachung vornehmen und das Dachfenster als Reaktion auf einen beginnenden Regenfall selbsttätig schließen.

Ferner bieten sich zahlreiche Anwendungsgebiete im Sanitärbereich an, so etwa zur Steuerung eines Urinals, bei welcher im vorliegenden Fall nicht die Bewegung eines Benutzers detektiert wird, sondern vielmehr die Bewegung von Tropfen bzw. Feuchtigkeitsflüssen auf der Oberfläche die Radar-Bewegungserfassung auslöst.

Auch hinsichtlich der Verwendungen ist die vorliegende Erfindung natürlich nicht auf die beschriebenen Ausführungs-fälle beschränkt, sondern erstreckt sich insbesondere auch auf solche Anwendungen mit kurzem Erfassungsbereich, die nicht die Erfassung von Regen oder Feuchtigkeit betreffen.

Im Ergebnis ist auf die beschriebene Weise ein für kurze Reichweiten geeigneter Impulsradar-Bewegungsensor realisierbar, der die hochfrequenztechnischen und konstruktiven Vorteile des bekannten Breitband-Impulsradarsensors ausnutzt, diesen jedoch erstmals für Entfernungsbereiche einsetzbar macht, deren effektive Laufzeit unter einem schwingungsfreien Verzögerungsminimum konventionell eingesetzter Verzögerungskreise liegt.

## Patentansprüche

1. Mikrowellen-Bewegungssensor mit einem Hochfrequenzimpulse einer i.w. konstanten Impulsfolge erzeugenden Sendemodul und einem Empfangsteil, das zum Empfangen von an einem Objekt reflektierter Hochfrequenzimpulse und zum Erzeugen eines Bewegungsdetektionssignals als Reaktion auf eine bewegungsbedingte Änderung der empfangenen Hochfrequenzimpulse ausgebildet ist und eine Mischereinheit (VD1A, VD1B) mit nicht-linearer Kennlinie aufweist,
dadurch gekennzeichnet, daß
zwischen einem Ausgangsbereich (40, 42) des Sendemoduls und einem Eingangsbereich (48, 50) des Empfangsteils eine verzögerungsfreie Kopplungseinrichtung (54) vorgesehen ist, die zum Einkoppeln der durch das Sendemodul erzeugten Hochfrequenzimpulse in die Mischereinheit so ausgebildet ist, daß durch die eingekoppelten Hochfrequenzimpulse ein Aufsteuern der Mischereinheit und ein Mischen mit einem reflektierten Hochfrequenzimpuls erfolgen kann, wobei die Kopplungseinrichtung durch eine dem Sendemodul zugeordnete sendeseitige Antenne (42) und eine dieser benachbart vorgesehene, dem Empfangsteil zugeordnete empfangsseitige Antenne (48) realisiert ist.

2. Sensor nach Anspruch 1, dadurch gekennzeichnet, daß mindestens eine der sendeseitigen und empfangsseitigen Antennen als Drahtantenne ausgebildet ist und bevorzugt eine Abstimmung der Kopplungseinrichtung durch eine Längenanpassung und/oder eine Ausrichtung der Drahtantenne(n) gegeneinander durchgeführt werden kann.

3. Sensor nach Anspruch 1 oder 2, dadurch gekennzeichnet, daß die sendeseitige und/oder die empfangsseitige Antenne als Streifenleitungs- und/oder Schlitz- und/oder Patch-Antenne auf einem unterliegenden Substratträger (62) realisiert ist, der weitere Elektronikbauelemente des Mikrowellen-Bewegungssensors trägt und insbesondere eine Abstimmung des Kopplungsgrades der Kopplungseinrichtung durch eine mechanische Änderung wirksamer Strahlungsflächen der Antenne(n), insbesondere durch Abtragen eines die Streifenleitungs-, Schlitz- oder Patch-Antenne ausbildenden Leiterstücks auf dem Substratträger, durchgeführt werden kann.

4. Sensor nach einem der Ansprüche 1 bis 3, dadurch gekennzeichnet, daß die Mischereinheit als symmetrischer Diodenmischer ausgebildet ist, dem ein nachgeschalteter, symmetrischer Verstärker aus Operationsverstärkern nachgeschaltet ist.

5. Sensor nach einem der Ansprüche 1 bis 4, gekennzeichnet durch Mittel zur vorbestimmbaren Einstellung einer Impulslänge der Impulsfolge, wobei bevorzugt eine Wiederholfrequenz der konstanten Impulsfolge zwischen 100 kHz und 5 MHz liegt und/oder eine Mittenfrequenz der Hochfrequenzimpulse zwischen 2,4 und 2,5 GHz liegt.

6. Verwendung des Mikrowellen-Bewegungssensors nach einem der Ansprüche 1 bis 5 in einer Feuchtigkeits- und/oder Regensensorvorrichtung, die zur Erfassung einer Niederschlags- und/oder Feuchtigkeitsänderung auf einer Oberfläche, insbesondere auch einer Fensterfläche, ausgebildet ist, wobei der Mikrowellen-Bewegungssensor auf einer einer Niederschlags- bzw. Feuchtigkeitseinfallseite abgewandten Seite der Oberfläche angeordnet und mit seinem Erfassungsbereich auf die Oberfläche gerichtet ist.

7. Verwendung nach Anspruch 6, dadurch gekennzeichnet, daß die Oberfläche die Außenfläche einer Fahrzeugscheibe ist und der Mikrowellen-Bewegungssensor in einem Abstand von weniger als 20 cm hinter der Oberfläche vorgesehen ist.

8. Verwendung nach Anspruch 6, dadurch gekennzeichnet, daß die Oberfläche von einem Außenspiegelgehäuse oder einer Stoßstange eines Fahrzeuges ausgebildet ist und der Mikrowellen-Bewegungssensor in einem von dem Außenspiegelgehäuse bzw. der Stoßstange umschlossenen Raum befestigt ist.

9. Verwendung nach Anspruch 6, dadurch gekennzeichnet, dass die Oberfläche eine Beckeninnenfläche eines Waschbeckens oder Urinals ausbildet und der Mikrowellen-Bewegungssensor an einer Beckenrückseite insbesondere verdeckt vorgesehen ist.

10. Verwendung nach einem der Ansprüche 6 bis 9, dadurch gekennzeichnet, daß der Mikrowellen-Bewegungssensor mit einer Auswerteelektronik zum Erfassen eines Wassertropfens entsprechenden Feuchtigkeitseinfalls auf die Oberfläche verbunden ist und ein Steuersignal zum Aktivieren einer Spül- und/oder Wischervorrichtung ausgibt.
